# EUROPEAN PATENT APPLICATION

(11) **EP 4 378 322 A1**
(43) Date of publication of application: **05.06.2024**
(21) Application number: 21951727.3
(22) Date of filing: 28.07.2021
(51) Int. Cl.: A23L 7/13, A21D 13/40

(54) **CHURRO-SHAPED CORN SNACK**

(71) Applicant: Cyl Ibersnacks, S.L, 47400 Medina del Campo, Valladolid (ES)
(72) Inventor: DEL VILLAR GARRACHÓN, Vanesa, 47170 Renedo de Esgueva (Valladolid) (ES); JIMÉNEZ SANZ, Marta, 47130 Simancas (Valladolid) (ES)
(74) Representative: López Camba, Emilia
(86) International application number: PCT/ES2021/070573
(87) International publication number: WO 2023/007037

(57) **Abstract**

Churro-shaped corn snack which is made based on nixtamalised corn, water, salt and sunflower oil fat, externally having a series of longitudinal grooves showing a thickness and depth, wherein the nixtamalised corn may be corn flour or corn grain, and the preferred composition is:
- Yellow corn flour 76% +- 5%
- Salt 2%
- Sunflower oil fat 22% +- 3%
Humidity +-0.3%

Thanks to the characteristics of the composition and its manufacturing process, it is possible to have a crunchier sensation, with the possibility of dipping in sauce and being able to mix and extrude the mixture with fruit powder.

## Description

### OBJECT OF THE INVENTION

The object of the present invention, as the title of the invention indicates, is a churro-shaped corn snack, where the corn used is a nixtamalised corn and the corn snack has a cylindrical shape and longitudinal ribs of the typical Spanish churro, which is made by extrusion of the dough and subsequent frying to have a crisp texture suitable for direct consumption as a snack or for dipping in sauces.

The present invention is characterised in that it has a special composition in addition to the special design and configuration of the final product obtained. A product is obtained with a very crisp texture and with ribs that allow you to scoop up the sauce and be suitable for the chocolate phase.

Therefore, the present invention belongs to the field of food and particularly those made based on corn meal.

### BACKGROUND OF THE INVENTION

Spanish churros made based on a flour mixture are known by everyone, which, by means of an extrusion process, the dough is passed through a head designed with special nozzles that allow obtaining the ribbed outer shape that when fried gives a crispy texture.

However, churros made from wheat flour have gluten so they cannot be consumed by people with coeliac disease or intolerance.

It is therefore the object of the present invention to develop a composition that allows obtaining products similar to churros suitable for coeliacs, developing a composition such as is hereinafter described and specified in its essence in the first claim.

### DESCRIPTION OF THE INVENTION

The object of the present invention is a churro-shaped corn snack characterised in that it comprises nixtamalised corn, water and salt, where the mixture obtained is made in an industrial mixer equipped with paddles until a fine and homogeneous dough is obtained.

The thin and homogeneous dough formed is passed through an extrusion equipment with head that has nozzles with a conical shape and star tip. The pressure effect causes the exit of the dough through the nozzles with the desired shape and by regulating the speed of the cutting head (the speed of the blades) the length of the product is adjusted to the optimal standard for dipping in sauces. (length (5-7 cm; and diameter 0.6-0.7 cm).

It requires a design of specific nozzles so that the ribs are as desired in terms of depth and dimensions.

The frying process is carried out in a fryer with paddles. By regulating the speed of the paddles, frying times (1 min and 40 sec-2 min and 40 sec) and temperature (178-186 °C), the process is regulated to obtain the fried product with a fat percentage of 21-23%. Crunchy texture and golden colour.

Finally, a cooling and flavouring process is carried out.

Thanks to the characteristics described, a product with a very crunchy texture and with ribs is obtained that allows scooping up sauces.

In addition, the product obtained has additional advantages.
- The possibility of being able to develop subsequent recipes both sweet and salty since the adherence of sugar and flavours is improved.
- Have a crunchier feel.
- Possibility of dipping in sauces since the ribs allow better retention of the sauces.
- Being able to mix and extrude the mixture with fruit powder.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:

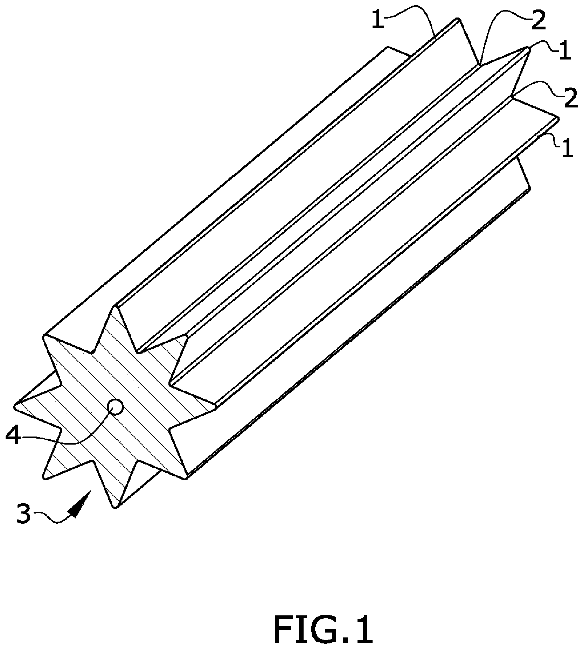

Figure 1 shows a perspective view with geometry of the churro.

### PREFERRED EMBODIMENT OF THE INVENTION

In view of the figures, a preferred embodiment of the proposed invention is described below.

Figure 1 shows that the snack is said to be churro-shaped because it has a star-shaped cross-section where a series of protrusions (1) alternating with a series of recessed areas (2) with respect to the protrusions are defined longitudinally to the churro, so that protrusions (1) and recessed areas (2) run longitudinally along the entire length of the churro.

This particular geometry allows that after frying the snack is crispier when the water contained inside the dough is released.

In addition, as a result of the extrusion, the churro has a central perforation (4) that runs longitudinally along the churro that gives it additional crispy organoleptic properties after frying.

The composition of the churro-shaped corn snack is nixtamalized corn, water, fat, and salt. Additionally, and in a complementary manner, it may contain flavours added to the dough during its preparation or subsequently.

The nixtamalised corn may be a corn meal or a corn grain.

Nixtamalised corn is a corn that has been mixed with lime, in the case of corn grain it is cooked with lime in a proportion of approximately 1.2% by weight. The incorporation of lime implies an improvement in the cooking process, the elimination of the pericarp from the corn grain is facilitated, and the bioavailability of amino acids, the content of phosphorus and calcium, of soluble fibre is favoured.

The cooking process of corn in grain to nixtamalise it is of the order of 48 to 50 minutes at a temperature of 90°C to 94°C

In the case of flours, they are purchased with this requirement, i.e. their production involves the incorporation of calcium.

In a possible alternative embodiment the proportion of the snack components once obtained could be:
- Yellow corn flour 76% +- 5%
- Salt 2%
- Sunflower oil fat 22% +- 3%
- Humidity 0.7%+-0.3%

Alternatively, part of the nixtamalised corn can be replaced with white flour, leaving a snack composition once obtained as the one that is shown below.
- Yellow corn flour 57% +- 5%
- White corn flour 19%+- 5%
- Salt 2%
- Sunflower oil fat 22% +- 3%
- Humidity 0.7%+-0.3%

During the preparation process of the dough, aromas or flavourings can be added, such as for example raspberry or adding spicy chilli flavour, they can also be added once the snack is obtained after frying, such as for example adding salt, sugar, chocolate, etc.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Churro-shaped corn snack, **characterised in that** it is made based on nixtamalised corn, water, salt and fat, externally having an alternating succession of protrusions (1) and recesses (2) that run longitudinally along the length of the snack having a star-shaped cross-section.

2. Churro-shaped corn snack according to claim 1, **characterised in that** the nixtamalised corn is corn flour.

3. Churro-shaped corn snack according to claim 1, **characterised in that** the nixtamalised corn is corn grain.

4. Churro-shaped corn snack according to any of the preceding claims, **characterised in that** the composition also has fruit powders.

5. Churro-shaped corn snack according to any of the preceding claims, **characterised in that** the proportion of the components of the snack is:
- Yellow corn flour 76% +- 5%
- Salt 2%
- Sunflower oil fat 22% +- 3%
- Humidity 0.7%+- 0.3%

6. Churro-shaped corn snack according to any of claims 1 to 4, **characterised in that** the proportion of the snack components is:
- Yellow corn flour 57% +- 5%
- White corn flour 19%+- 5%
- Salt 2%
- Fat 22% +- 3%
- Humidity +-0.3%
